(19) **Europäisches Patentamt / European Patent Office / Office européen des brevets**

(11) **EP 2 921 376 B1**

(12) **EUROPEAN PATENT SPECIFICATION**

(45) Date of publication and mention of the grant of the patent:
**13.12.2017  Bulletin 2017/50**

(51) Int Cl.:
*B62D 15/02* (2006.01)    *G01C 21/26* (2006.01)
*G05D 1/02* (2006.01)    *G06K 7/10* (2006.01)
*B60L 11/18* (2006.01)

(21) Application number: **14305388.2**

(22) Date of filing: **19.03.2014**

(54) **A method and device for determining direction information for guiding a vehicle to a predetermined position**

Verfahren und Vorrichtung zur Bestimmung von Richtungsinformationen zur Führung eines Fahrzeugs zu einer vorbestimmten Position

Procédé et dispositif permettant de déterminer des informations de direction pour guider un véhicule vers une position prédéterminée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.09.2015  Bulletin 2015/39**

(73) Proprietor: **ALCATEL LUCENT**
**92100 Boulogne-Billancourt (FR)**

(72) Inventors:
• **Lange, Christian**
 **70435 Stuttgart (DE)**
• **Ballentin, Ralph**
 **70435 Stuttgart (DE)**
• **Noack, Ferenc**
 **70435 Stuttgart (DE)**

(74) Representative: **Berthier, Karine et al**
 **Alcatel-Lucent International**
 **Patent Business**
 **Site Nokia Paris Saclay**
 **Route de Villejust**
 **91620 Nozay (FR)**

(56) References cited:
 **WO-A1-2007/057969    US-A1- 2001 027 360**
 **US-A1- 2004 113 787    US-A1- 2012 095 617**
 **US-A1- 2012 262 002**

## Description

### Field of the Invention

The present invention relates to a method and a device for determining direction information for guiding a vehicle to a predetermined position.

### Background of the Invention

In an implementation capable of determining direction information for guiding a vehicle to a predetermined position Global Positioning System Sensors are used to interact with geostationary satellites in order to determine the position of the vehicle, compare the position of the vehicle to the predetermined position using a map and to determine direction information such as navigation information depending thereon. This method often is restricted inside structures like parking decks because it depends on the availability of the satellite signals.

In another implementation radar or ultrasonic sensors mounted to a vehicle are used to detect the area surrounding the vehicle and to determine direction information such as acoustic proximity warnings or a graphical representation of the vehicle and its surrounding area. This method relies on detection of objects like other cars or posts elevated above the surface area the vehicle is driving on and is therefore restricted to structures having such elevated objects.

A further implementation uses optical sensors such as to detect markings on the surface the vehicle is driving on to generate acoustic signals or graphical representations of the vehicle and its surrounding area. Such sensors are susceptible to weather conditions as optical reflections caused by rain or snow may impact the reliability of the detection of the markings. Another implementation makes use of triangulation of radio signals in order to determine the current position of the vehicle. Such implementation uses the triangulation to determine the position of the vehicle in order to determine the direction information. This implementation is limited regarding the accuracy of the direction information in particular for vehicle with one steerable axle at the front because the orientation of the vehicle is unknown from the position itself.

US 2001/027360 describes determination of position and direction of a moving vehicle, where a line of RFID tags is detected by two RFID receivers fixed at the vehicle, where the receivers are placed orthogonal to the tag line. When one of the receivers does not detect any more tags, the direction of the vehicle is determined as a divergence in that direction.

WO 2007/057969) detects position and direction of a moving vehicle by detecting RFID tags with two receivers of the vehicle and where the tags are distributed in a grid. The detection of two tags gives an unambiguously position and direction according to the tags listed in a table.

US 2012/095617 describes navigation to a charging station for electrical car, where the car detects a radio beacon direction by three direction sensitive radio sensors and direction and distance are determined according to triangulation.

### Summary of the Invention

The object of the invention is thus to provide a highly reliable and accurate method and device for determining direction information for guiding a vehicle to a predetermined position.

The main idea of the invention is to determine direction information for guiding a vehicle to a predetermined position depending on the reception of a first predetermined radio signal comprising

- detecting a second predetermined radio signal at a first receiver,
- detecting the first predetermined radio signal at a second receiver, and determining the direction information depending on the reception of the first predetermined radio signal at the second receiver, in particular independent of the reception of the second predetermined radio signal, when the second predetermined radio signal is detected at the first receiver. This way the orientation of the vehicle relative to the predetermined position is identified from the detection of the predetermined radio signals and is accounted for in the direction information.

Advantageously the direction information is determined from the reception of the first predetermined radio signal at the first receiver when the first predetermined radio signal is detected at the first receiver and the second predetermined radio signal is not detected at the first receiver. This improves the direction information further by adding another detectable orientation of the vehicle.

Advantageously a third predetermined radio signal is detected at the second receiver, and the direction information is determined depending on the difference between the reception of the first predetermined radio signal and a reception of the third predetermined radio signal at the second receiver. This improves the direction information by considering an additional predetermined radio signal when it is detected.

Advantageously a left or right steering instruction is determined depending on the reception of the first predetermined radio signal or the third predetermined radio signal. This allows to create an output of the direction information easily understandable to a human driver or easily implementable by an actuator of an autonomous driving system.

Advantageously a fourth predetermined radio signal is detected at the first receiver, and a forward or backward driving instruction is determined depending on the reception of the fourth predetermined radio signal. This further improves an output of the direction information easily understandable to a human driver or easily implementable by an actuator of an autonomous driving system.

Advantageously the reception is determined depending on the signal strength of the respective predetermined radio signal. This provides an easy determination of the position of sender and receiver and allows the use of low cost or low range sender such as devices having oscillating circuits like active or passive radio frequency identification tags.

Advantageously the direction information is determined from direction information previously determined and a current direction information, in particular the both combined depending on a predetermined value. This improves the direction information by increasing the robustness of the output generating either a continuous output by smoothing or averaging the direction information. Preferably an additive combination of the previously determined direction information and the current direction information is used in which the summands are weighted. For example the previously determined direction information is weighted by a factor corresponding to the predetermined value.

The invention also concerns a device for determining direction information for guiding a vehicle to a predetermined position from the reception of a first predetermined radio signal comprising

- a first detector operable to detect a second predetermined radio signal at a first receiver,
- a second detector operable to detect the first predetermined radio signal at a second receiver, and
- a processing unit operable to determine the direction information from the reception of the first predetermined radio signal at the second receiver, in particular independent of the reception of the second predetermined radio signal, when the second predetermined radio signal is detected at the first receiver.

Further developments of the invention can be gathered from dependent claims and the following description.

## Brief Description of the Drawings

In the following the invention will be explained further making reference to the attached drawings.

Fig. 1-9 schematically show states of a parking process of a vehicle on a parking structure;

Fig. 10 schematically shows a device for determining direction information;

Fig. 11 schematically shows a first flow chart of a part of a method for determining direction information.

Fig. 12 schematically shows a second flow chart of a part of a method for determining direction information.

Fig. 13 schematically shows a third flow chart of a part of a method for determining direction information,

Fig. 14 schematically shows a fourth flow chart of a part of a method for determining direction information.

## Detailed Description of the Invention

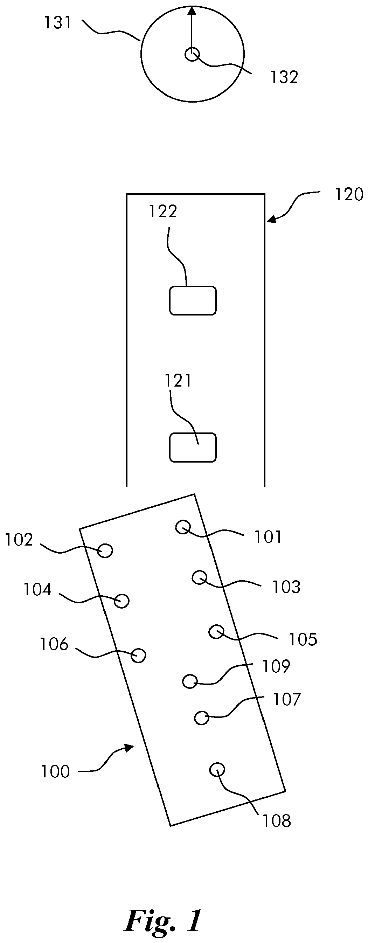

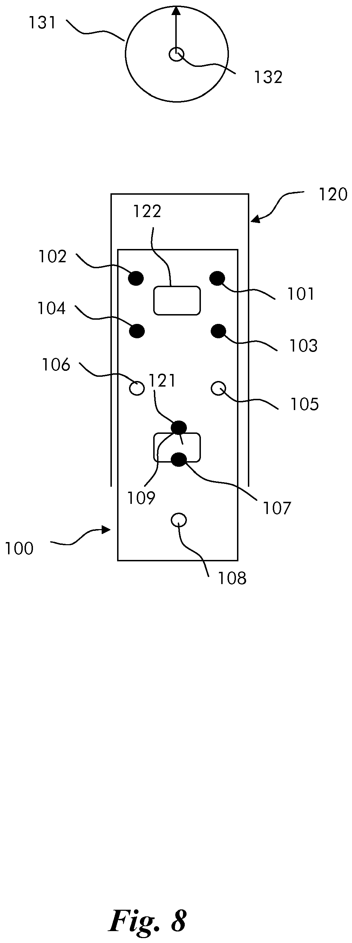

Figures 1 - 9 depict a parking structure 120 and a vehicle 100. The vehicle 100 comprises in the example radio frequency identification devices 101 to 109 that are adapted to send individual predetermined signals corresponding to the individual radio frequency identification device sending the signal. According to the example the radio frequency identification devices 101 to 109 are mounted depending on their identification at predetermined positions of the vehicle 100. In the example the geometry of the vehicle 100 is approximately rectangular. The mounting position relative to the vehicle geometry and driving direction and the identification of the radio frequency identification devices 101 to 109 is in the example:

| | RFID | mounting position |
|---|---|---|
| radio frequency identification device 101 | 1 | front right |

(continued)

| | RFID | mounting position |
|---|---|---|
| radio frequency identification device 102 | 2 | front left |
| radio frequency identification device 103 | 3 | mid to front right |
| radio frequency identification device 104 | 4 | mid to front left |
| radio frequency identification device 105 | 5 | middle right |
| radio frequency identification device 106 | 6 | middle left |
| radio frequency identification device 107 | 7 | mid to rear center |
| radio frequency identification device 108 | 8 | rear center |
| radio frequency identification device 109 | 9 | middle center |

Any other amount of radio frequency identification devices or mounting positions may be used. For example only two radio frequency identification devices may be placed within a certain distance on the vehicle 100.

The radio frequency identification devices may comprise an active or passive oscillating circuit adapted to send the respective RFID. This way the respective mounting position is derivable from the received signals. Accordingly the individual predetermined signals allow to identify the mounting position of the sender on the vehicle 100.

A parking structure 120 in the example of figures 1 - 9 is indicated by solid lines forming a rectangle that is open at one of the short ends. Markers of the parking structure indicate the dimensions of a parking lot for example using road marking color, pylons or curbs.

The parking structure 120 in the example comprises a first receiver 121 and a second receiver 122. The first receiver 121 and the second receiver 122 are mounted on the parking structure 120 or underneath the surface. The first receiver 121 and the second receiver 122 may be mounted as depicted in figures 1 - 9 symmetrically on the longitudinal center axle of the rectangle indicating the parking structure 120. Likewise the first receiver 121 or the second receiver 122 may be mounted at any other position suitable to receive the signal of the radio frequency identification devices 101 - 109. They may for example be mounted on an axis connecting diagonally two corners of the rectangle as well as outside of the rectangle.

The first receiver 121 or the second receiver 122 are adapted to receive the predetermined radio frequency identification signals from the radio frequency identification devices. To that end the first receiver 121 and the second receiver 122 are adapted to excite the active or passive oscillating circuit to send the respective RFID. Alternatively a separate sender not depicted in figures 1 - 9 may be used to excite the oscillating circuits as well.

In any way the mounting position of the first receiver 121 and the second receiver 122 is such that individual predetermined signals can be received when the vehicle 100 is driving on the parking structure 120.

The maximum distance for reception of radio signals may vary depending on the radio signals, the mounting position or the surface properties. In the example the mounting position is such that radio signals from radio frequency identification devices mounted to the vehicle 100 are receivable by the first receiver 121 or the second receiver 122 when the vehicle 100 approaches the parking structure 120.

In figures 1 - 9 the predetermined radio signals of the radio frequency identification devices that are used in the respective situation for determining the direction information are depicted as circles filled solidly black. The predetermined radio signals of these are received by at least one of the receivers. Other predetermined radio signals still be received by one of the receivers.

Instead of using radio frequency identification devices 101 - 109 any other device suitable to transmit the same information may be used. Likewise the receivers that are mounted at the parking structure 120 may be adapted to receive the respective signals.

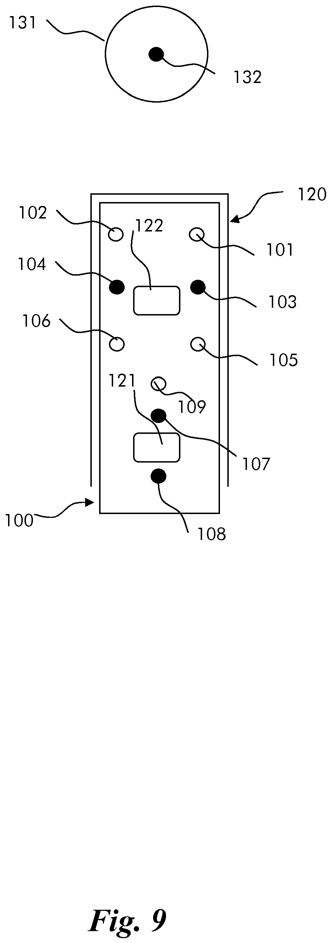

Figures 1 - 9 schematically show states of a parking process of the vehicle 100 on the parking structure 120. According to figures 1 - 9 the vehicle 100 is suitable to fit into the parking structure 120. A predetermined target position of the vehicle is in the example of figures 1 - 9 reached when the vehicle is parked regarding three sides of the vehicle equidistantly relative to the solid lines forming the rectangle limiting the parking structure 120. This is depicted in Figure 9.

This position, as depicted in Figure 9, results in a specific relative position of the radio frequency identification devices 101 - 108, the first receiver 121 and the second receiver 122. This specific relative position depends on individual parking structures 120, individual vehicles 100 and individual mounting positions of the radio frequency identification devices 101 - 108.

In the example independent from the vehicle 100 and the parking structure 120 the relative positions of the radio frequency identification devices 101 - 109 and the first receiver 121 and the second receiver 122 are identical. This may be achieved by installing the same set of radio frequency devices 101 - 109 at the same predetermined distances from each other on any vehicle equipped with this devices. Likewise the first receiver 121 and the second receiver 122 may be mounted at the same distance in a predetermined geometry regarding any parking structure.

Preferably the predetermined position that the vehicle 100 is guided to describes an optimal parking position with respect to the alignment of a primary and secondary inductive coil of a wireless charging system. In this case the relative position of the radio frequency identification devices 101 - 109 and the first receiver 121 and the second receiver 122 are selected such that the two inductive coils are aligned optimally when the vehicle 100 is parked on the parking structure 120.

Optionally the alignment may be entirely independent of the parking structure 120 or vehicle 100. In this case the predetermined position may depend only on the optimal alignment of the two inductive coils.

Likewise a tolerance band for the relative positions of the radio frequency identification devices 101 - 108 and the first receiver 121 and the second receiver 122 may be used to allow some deviation from the predetermined position.

Instead of identical relative positions, the positions may be proportional by a predetermined factor or predetermined relation for different vehicles 100, parking structures or inductive coil sizes or shapes. In any case the situation in which the vehicle 100 reaches the predetermined position is identifiable from this relative positions.

Figures 1 - 9 schematically depict an output 131, e.g. a human machine interface, operable to receive and output the direction information. The output 131 is for example mounted near the parking structure 120. The output 131 may be a display operable to receive and display the direction information as depicted figures 1 - 9 in form of an arrow 132. The arrow 132 in the example indicates the driving direction. Likewise the direction information may be implemented as instructions, i.e. a left or right driving instruction, e.g. including steering angle, a forward or backward driving instruction or a combination of them. Such instructions may be coded as voice audio or graphical video instructions as well.

The display may be mounted near the parking structure 120 visible to a driver of the vehicle 100 when approaching the parking structure 120. Likewise the output 131 may be a display inside the vehicle 100. In this case a sender not depicted in figures 1 - 9 may be used to send the direction information to the output 131. Optionally or alternatively instead of the display a sender for sending control commands to an autonomous driving system installed in the vehicle 100 may be used as well.

When a display is used, as depicted in figure 9 the arrow 132 is visible as a point to indicate that the optimal position has been reached. In the other pictures the position of the arrow 132 depends on the direction information and indicates the target driving direction relative to the current position of the vehicle 110. This means that in figure one the arrow 132 indicates straight forward driving. The direction the arrow 132 points as depicted in figure 1 indicates for example 0 or 360 degrees of steering angle as forward driving direction. Other steering angles are subsequently indicated on a clockwise oriented scale in that

    1 to 90 degrees indicate right forward driving,
    91 to 179 degrees indicate right backward driving,
    180 degrees indicates straight backward driving,
    181 to 269 degrees indicate left backward driving, and
    270 to 359 degrees indicate left forward driving.

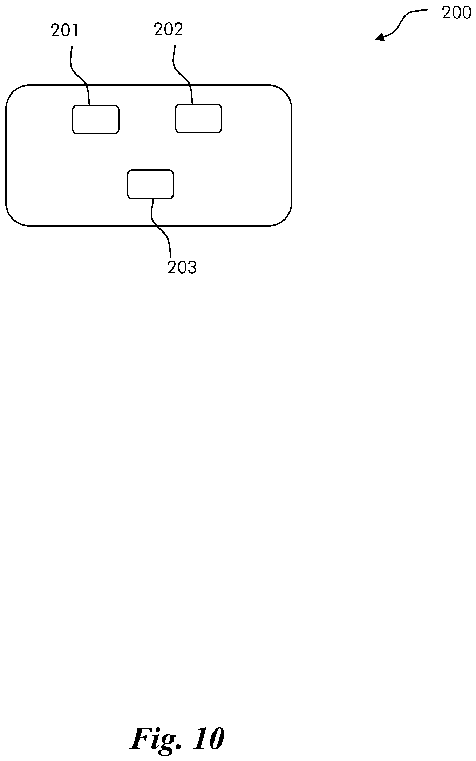

Figure 10 depicts a device 200 for determining direction information for guiding the vehicle 100 to the predetermined position.

The device 200 comprises a first detector 201 connectable to the first receiver 121 and operable to detect the predetermined radio signals at the first receiver 121.

The device 200 furthermore comprises a second detector 202 connectable to the second receiver 122 and operable to detect the predetermined radio signals at a second receiver 122.

The output 131, when applicable the not depicted sender, and the device 200 as well as the first receiver 121 and second receiver 122 may be connected by wires. Alternatively any of this devices may be connected by wireless links. The connection may be for example via local area network (LAN), wireless local area network (WLAN, 802.11n) or wide area network (WAN). The connection can but must not be directly between the devices.

The first detector 201 and the second detector 202 are in the example adapted to detect the presence of aforementioned predetermined radio signals from the respective radio frequency identification devices 101 - 109.

Furthermore the first detector 201 and the second detector 202 are in the example adapted to determine the reception of this signals. Preferably the signal strengths of the detected predetermined radio signals is determined, e.g. in form of the Received Signal Strength Indication well known as RSSI.

The RSSI may be received from the any of the receivers in digital messages or as analog signals. In the first case the receivers comprise circuitry to generate the messages from signals received by an internal oscillating circuit. In the latter case the receivers may be antennas directly connectable to the detectors of the device 200.

Furthermore the device 200 comprises a processing unit 203 operable to interact with the first detector 201 and the second detector 202 to receive information about the predetermined radio signals, e.g. each detected predetermined radio signal and the reception thereof. Preferably the RFID of the signal and its RSSI is received by the processing unit 203.

The processing unit 203 is operable to select the predetermined radio signals that are used for the determination of the direction information. Furthermore the processing unit 203 is operable to determine if the first receiver 121 or the second receiver 122 is selected as source at which the predetermined radio signal is detected. For example the first detector 201 or the second detector 202 detects any predetermined signal that is received at the first receiver 121 and the second receiver 122 respectively and the processing unit 203 selects which of the detectors is used as input for which of the detected signals.

According to the example the reception of a signal refers to the detected signal strength value, e.g. RSSI. In contrast, detecting of the signal refers to identifying the source of the signal, e.g. RFID.

The processing unit 203 is operable to determine the direction information from the reception of a first predetermined radio signal at the first receiver 121 when the first predetermined radio signal is detected at the first receiver 121 and a second predetermined radio signal is not detected at the first receiver 121.

In the example the second predetermined radio signal is defined as the signal from the middle center radio frequency identification device 109 identifiable by the RFID 9. The first predetermined radio signal may be any other of the signals from any of the other frequency identification devices 101 - 108 identifiable by their respective RFID 1 - 8. This information is for example available to the processing unit 203 from storage.

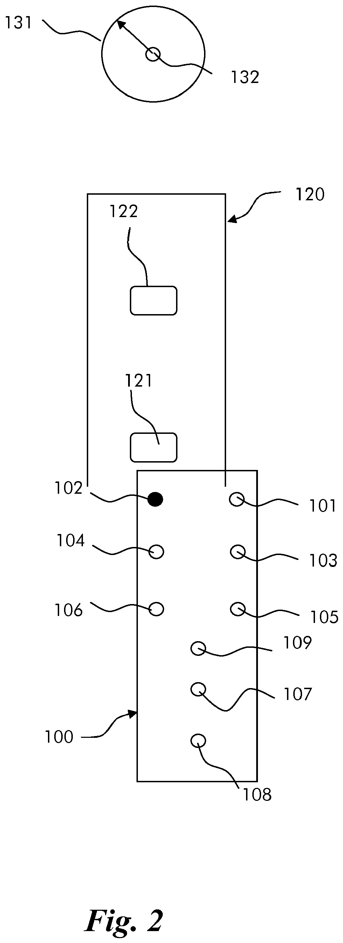

An example for this case is depicted in figure 2. According to figure 2, due to the range of the radio signals being limited by design to a certain distance matching the aforementioned positions, only the front left radio frequency identification device 102 is receipt by the first receiver 121. This means that in the example the first detector 201 detects the individual radio signal of the front left radio frequency identification device 102 by its RFID 2. Likewise the RSSI of this signal is detected by the first detector 201. Both are then provided to the processing unit 203.

The processing unit 203 is then operable to upon receipt of this information, the RFID and RSSI, determine the direction information. In the example the direction information is determined as a target angle of the steering wheel resulting the display 131 to depict the arrow 132 pointing forward left as shown in figure 2.

The processing unit 203 is further operable to determine the direction information from the reception, e.g. the RSSI, of the first predetermined radio signal at the second receiver 122, in particular independent of the reception, e.g. RSSI, of a second predetermined radio signal, when the second predetermined radio signal, e.g. the RFID, is detected at the first receiver 121.

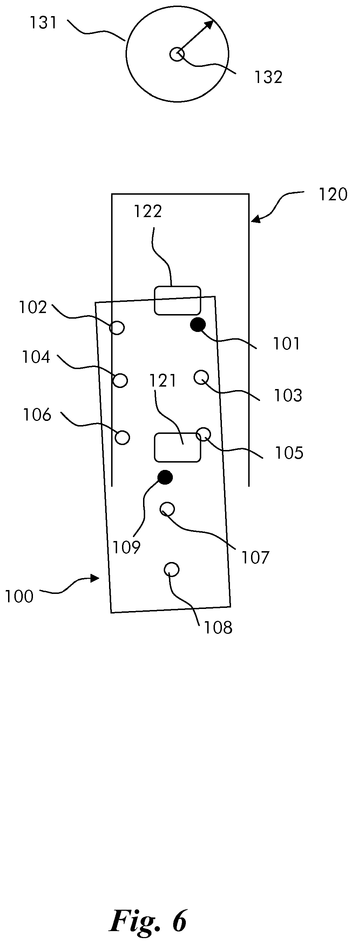

An example for this case is depicted in figure 6. According to the situation depicted in figure 6 the second predetermined radio signal identified in the example by the RFID of the center radio frequency identification device 109 is received by the first receiver 121. At the same time the predetermined signal of the front right radio frequency device 101 is received at the second receiver 122. In this case the processing unit 203 is provided with the respective RFID and RSSI and independently of other radio signals detected by the first receiver 121 selects the predetermined radio signal received by the second receiver 122 as the first predetermined radio signal. As described before the processing unit 203 determines the direction information from the first predetermined radio signal, which as depicted in figure 6 results in the output 131 depicting an arrow 132 indicating the front right direction.

In a preferred example, the difference between the signal strengths of a group of radio frequency identification devices is used to determine the direction information. A group consists in the example of predetermined signals from at least two radio frequency identification devices that are grouped for example depending on the mounting position of the sending radio frequency identification device. Any other number of signals from radio frequency identification devices may be grouped together as well.

The processing unit 203 is operable to determine the grouping for example from the detected predetermined signals, e.g. their RFID, and stored information about the mounting positions. Likewise a mapping of RFID to predetermined groups may be used.

In a preferred example, the predetermined signals from the front left radio frequency identification device 102 and front right radio frequency identification device 101 belong to a first group. Furthermore the predetermined radio signals from the front to mid left radio frequency identification device 104 and front to mid right radio frequency identification device 103 belong to a second group. Furthermore the predetermined radio signals from the mid left radio frequency identification device 106 and mid right radio frequency identification device 105 belong to a third group. Furthermore the predetermined radio frequency signals from the mid to rear center radio frequency identification device 107 and rear center radio frequency identification device 108 belong to a fourth group.

The processing unit 203 may be operable to determine the direction information depending on the difference between the reception of the first predetermined radio signal and a reception of a third predetermined radio signal at the first receiver 121 or the second receiver 122 when they belong to the same group.

To that end the first detector 201 or the second detector 202 are operable to detect the respective signals, e.g. by the RFID and the processing unit 203 is operable to group them depending on the RFID as described above. The processing unit 203 is further operable to group multiple predetermined radio signals detected into the appropriate group as well.

Likewise the first detector 201, the second detector 202 and the processing unit 203 are operable to determine the difference between multiple groups of detected predetermined radio signals from information about the respective reception, e.g. RSSI.

When the signal strengths of individual predetermined radio signals, e.g. the RSSI, is used to determine the direction information directly or from the difference, the signal strength of the individual predetermined radio signal or the difference may be compared to a predetermined threshold and tolerance respectively to decide whether to use the information or not. The threshold or tolerance is for example accessible by the processing unit 203 from storage of the device 200. The threshold or tolerance may be configurable via a human machine interface for example by an operator. The processing unit 203 in this case may be operable to determine forward as direction information default value in case the threshold is not exceeded or the difference is within the tolerance. This way to small signal strengths or differences thereof are ignored.

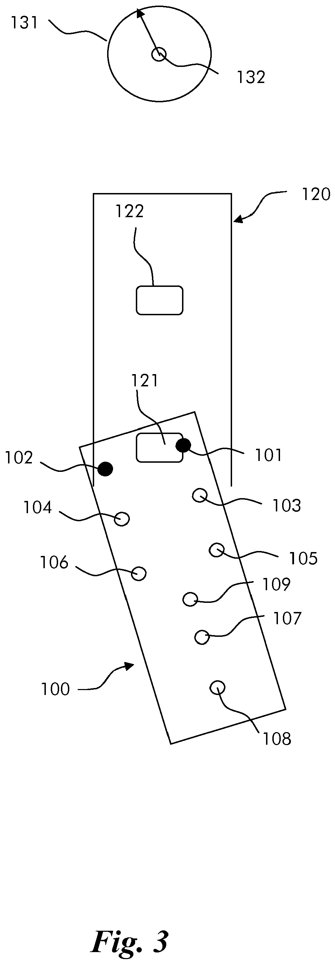

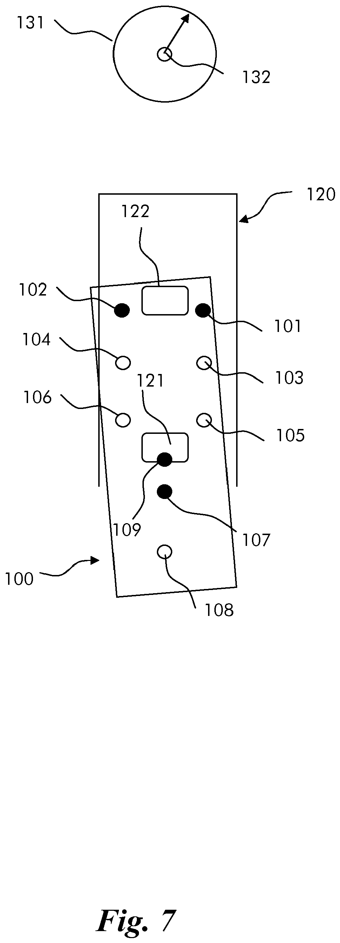

Examples for such cases relating to the reception at the first receiver 201 is depicted in figure 3 to 5. Another example for such case relating to the reception at the second receiver 202 is depicted in figure 7.

As depicted in figure 3, two predetermined radio signals are received at the first receiver 121. In this case the predetermined radio signal identified by the RFID 2 is selected as the first predetermined radio signal and the predetermined radio signal identified by the RFID 1 is selected as third predetermined radio signal. In this case the processing unit 203 determines that they belong to the same group, i.e. the first group.

In this case the processing unit 203 is operable to determine the difference between the signal strengths of the two signals. Optionally the difference is compared to the threshold and only used when it exceeds the threshold. This way to small differences are ignored. In that case the direction information default is driving forward. In the example the difference is not too small and the direction information is determined from the difference to indicate driving forward and slightly left using the arrow 132 and output 131 as depicted in figure 3.

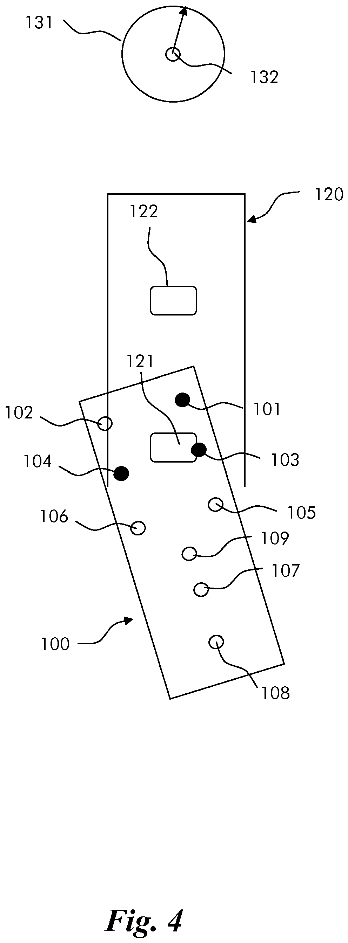

As depicted in figure 4, three predetermined radio signals are received at the first receiver 121. In this case the predetermined radio signal identified by the RFID 3 is selected as the first predetermined radio signal and the predetermined radio signal identified by the RFID 4 is selected as third predetermined radio signal because they belong to the same group, i.e. group 2. The predetermined radio signal identified by the RFID 2 is ignored in this example.

Subsequently the direction information is determined as described above for figure 3.

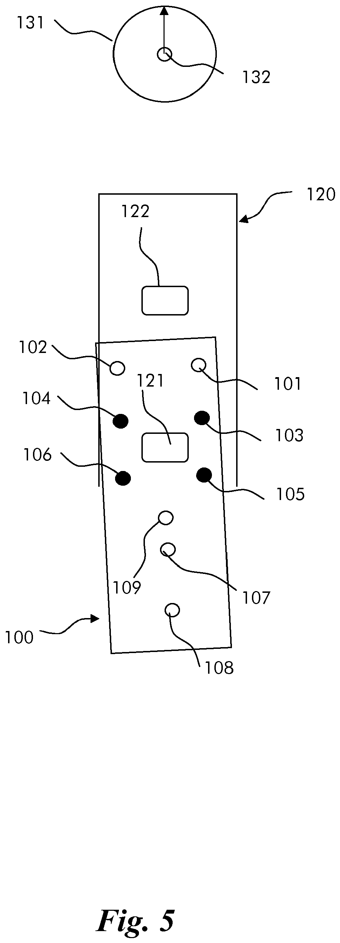

As depicted in figure 5, four predetermined radio signals are received at the first receiver 121. In this case the processing unit 203 is adapted to analyze the predetermined radio signals per group.

Firstly for group 2 the predetermined radio signal identified by the RFID 3 is selected as the first predetermined radio signal and the predetermined radio signal identified by the RFID 4 is selected as third predetermined radio signal because they belong to the same group, i.e. group 2.

Subsequently for group 2 the direction information is determined as described above for figure 3.

Secondly for group 3 the predetermined radio signal identified by the RFID 5 is selected as the first predetermined radio signal and the predetermined radio signal identified by the RFID 6 is selected as third predetermined radio signal because they belong to the same group, i.e. group 3.

Subsequently for group 2 the direction information is determined as described above for figure 3.

Additionally when direction information from more than one group is available the processing unit 203 is operable to determine the direction information from the direction information of the groups for example by averaging the direction information of the individual groups.

According to the situation depicted in figure 7, the predetermined radio signals of aforementioned group 1 are received at the second receiver 122. Furthermore according to this situation, the predetermined radio signals identified by RFIDs 9 and 7 are received at the first receiver. Accordingly the direction information for group 1 is determined as described above and the radio signal identified by RFID 7 is ignored.
Preferably the processing unit 203 may be operable to determining a left or right steering instruction as intermediate step or final result depending on the reception of the first predetermined radio signal and the third predetermined radio signal. This is particularly useful to indicate only steering wheel angle for a driver or autonomous driving system.

Preferably the processing unit 303 may be operable to determine a forward or backward driving instruction depending on the reception of a fourth predetermined radio signal at the first receiver 121. This may be used in particular in combination with separate driving angle information to indicate only forward or backward driving instructions to a driver while steering wheel operation is performed by an autonomous driving system using the indicated steering wheel angle.

In any case the direction information may be a number, e.g. an integer between 0 and 360 indicating clockwise the driving target direction wherein 0 and 360 indicate straight forward driving. Any other coding, such as individual indication for left or right and front or backward may be used as well.

Preferably the processing unit 203 is operable to store a previously determined direction information, e.g. the integer in storage. In this case the processing unit 203 is operable to access a predetermined value from storage, e.g. a forgetting factor between 0 and 1. In this example the processing unit 203 is operable to access the previously determined direction information from storage and determine a current direction information from the previously determined direction information and a current direction information by combining both depending on the predetermined value, e.g. by the formula

$$X_{new} = beta * x_{t-1} + (1-beta) * x_t,$$

where

Xnew is the direction information,
beta is the predetermined value, e.g. the forgetting factor (0.0...1.0),
xt-1 is the previously determined direction information, and
xt is the currently calculated direction information.

The invention is not limited to this shape and size of the parking structure 120 or vehicle 100 but may apply to any other size or form of parking structure 120 or vehicle 100 as well.

The RSSI values in an example range between 60 and 120. Depending on the used RFID transponder or reader lower RSSI values may be used as well. The absolute value of the difference between the detected RSSI values hence ranges in the example between 40 and 60. However in other setups the absolute value may differ as well.

A method for determining the direction information xt is described below. The resulting direction information xt is interpreted in an example as angles from 0 to 360 degrees where 0 and 360 degrees indicate straight forward driving and result in the examples of figures 1 to 8 in the display of the arrow pointing into the respective directions. According the example in figure 9 the display of the arrow 132 as a point. This is mapped for example to the direction information xt = 999.

The direction information xt is for example initiated by the integer value xt=0 to indicate forward driving and may be stored in a temporary variable to be handed over between the first method and procedures called by this method.

The method for example starts whenever the vehicle 100 approaching the parking structure 120 is detected. This may be detected by a permanently processed detection routine using the first receiver 121 or another separate receiver adapted to detect any of the predetermined radio signals.

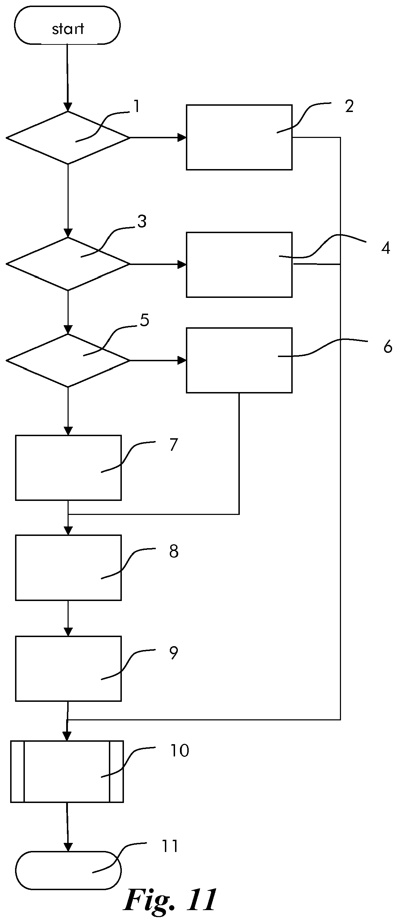

After the start the various parts of the method are executed as depicted in figures 11 - 13 and explained below. The predetermined radio signals are in the exemplary method received from radio frequency identification devices labeled RFID transponder below. The direction information xt is determined based on a position correction calculation. The first receiver 121 is in the example an antenna 1 and in second receiver 122 is an antenna 2.

Figure 11 depicts part of a first flow chart of a first method to handle a received RFID transponder and to start the position correction calculation.

The goal of this method is to analyze the received transponder and assign it to one of the groups. To that end the first method determines if the RSSI values are received from antenna 1 or antenna 2.

After the start in a step 1 a check is performed to determine if the transponder is the transponder with the RFID 8. If that is the case then step 2 is executed, else step 3 is executed.

In step 2 the transponder information is stored in a temporary variable to use it in later calculation steps. Afterwards step 10 is executed.

In step 3 a check is performed to determine if the transponder is the transponder with the RFID 7. If that is the case then step 4 is executed else step 5 is executed.

In step 4 the transponder information is stored in another temporary variable to use it in later calculation steps. Afterwards step 10 is executed.

In step 5 a check is performed to determine if the transponder is the transponder with the RFID 9. If this is the case step 6 is executed otherwise step 7 is executed.

In step 6 the input from antenna 2 is used for determining direction information xt. When required the input is switched from antenna 1 to antenna 2. This means that the information from antenna 2 is used for determining direction information xt instead of antenna 1. Preferably this is only the case for left and right direction instructions. Afterwards a step 8 is executed.

In step 7 the input from antenna 1 is used for determining direction information xt. When required it is switched from antenna 2 to use antenna 1. Preferably the input from antenna 1 is used for the left/right calculation and the information from antenna 2 is not processed for this purpose. Afterwards step 8 is executed.

In step 8 the received RFID transponder is not used for the forward/backward calculation but it is used for left/right calculation. In this step information about the groups is accessed.

In step 9 the transponder is added to the transponder group corresponding to the RFID, e.g. by assigning one of the aforementioned groups to the RFID. Afterwards the step 10 executed.

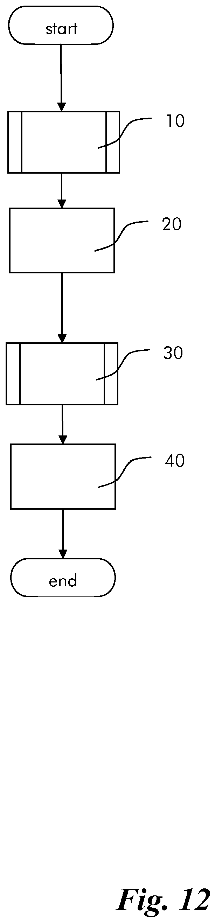

In step 10 the position calculation method is started. This is described below referencing figure 12. Afterwards the step 1 is executed unless any interrupt is received ending this method.

The position calculation method triggers position calculation functions and combines the results from the actual calculation with previous results. To allow a smooth position change the previous results will be considered in combination with the new results by introducing the predetermined value, e.g. forgetting factor beta. This is explained referencing figure 12

After the start a step 10 is executed.

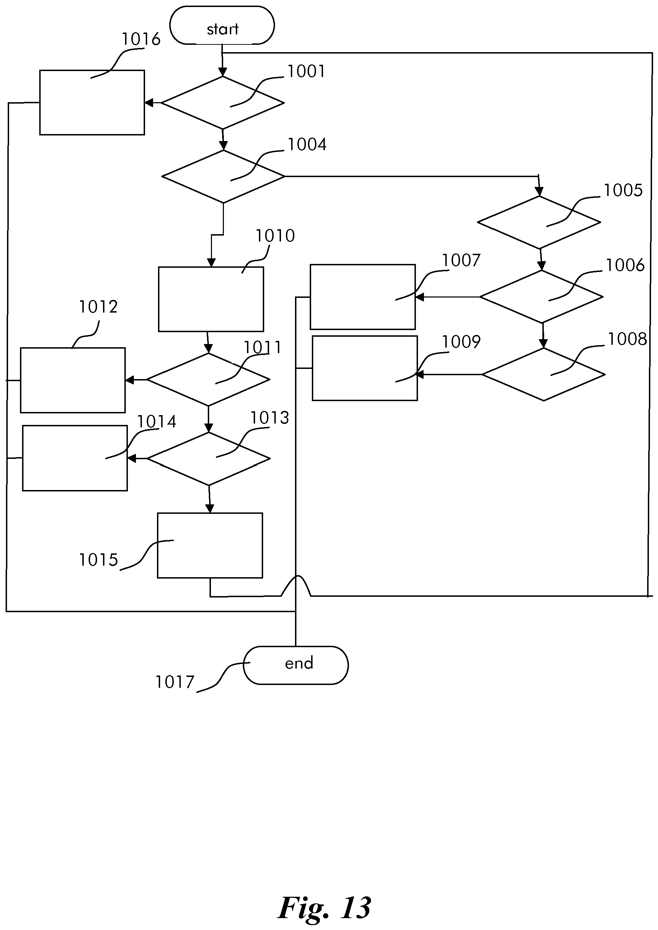

In step 10 a procedure to calculate the left/right position correction information is called. This is described in detail referencing Figure 13 below.

Afterwards a step 20 is executed.

In step 20 the current direction information xt is combined with the previously determined direction information xt-1 to a new direction information Xnew using the predetermined value, e.g. forgetting factor beta:

$$Xnew = beta * xt\text{-}1 + (1\text{-}beta) * xt.$$

Afterwards a step 30 is executed.

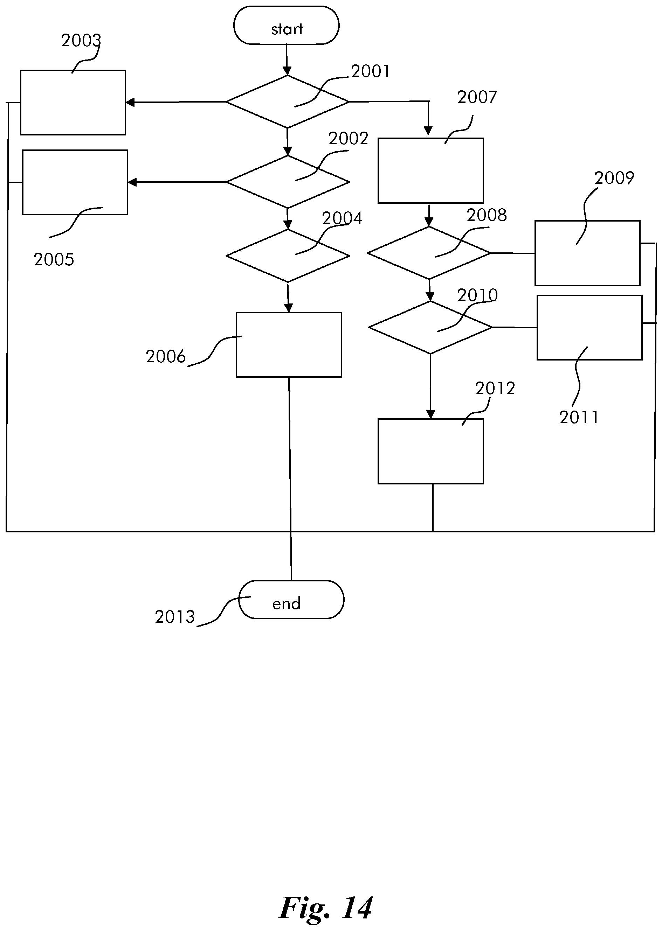

In step 30 the forward/backward position information is determined. This is described below in detail referencing figure 14.

Afterwards a step 40 is executed.

In step 40 the direction information xt is output, e.g. shown on the drive direction display (e.g. vehicle display, smart phone or other display devices). Afterwards the method ends, i.e. reverts to step 10 of the first method.

Figure 13 depicts a procedure using all left/right transponder groups to calculate a decision for the left/right correction. Therefore it uses only the RSSI values and transponder information from antennas selected as described before in the first method referencing figure 11.

After the start a step 1001 is executed.

In step 1001 a check is performed to determine if a transponder group is available which is not in a predetermined ignore list. The ignore list is initialized as empty list at the beginning of the method and filled with information about transponder groups that were already analyzed in previous loop cycles. If no group was found a step 1016 is executed otherwise the transponder group found is selected and afterwards a step 1004 is executed.

In step 1004 a check is performed to determine if both transponders (left/right) of this group are received. If not step 1005 is executed otherwise step 1010 is executed.

In step 1005 a check is performed to determine if another group with both transponders (left/right) is available and this transponder group is not on ignore list. If the transponder group is on ignored list it was analyzed but no direction decision was found. If another transponder group with both transponders is available step 1001 is executed and select the next transponder group and put this transponder group on hold otherwise step 1006 is executed to start analyzes.

In step 1006 a check is performed to determine if the left transponder of this group was received. This is indicated by the RFID value of the transponder. If that is not the case step 1008 is executed otherwise step 1007 is executed.

In step 1007 the direction information xt is determined to move left. This is for example indicated by setting xt = 270. Due to missing right transponder set the configured maximum aberrance value as return value which is defined by configuration and is a parameter to control the effect of this decision. This aberrance value is a maximum value that is used instead of the difference if only one transponder is received. In an example this value is set to an RSSI 15. It may depend on the forgetting factor, for example 15 at a forgetting factor 0.95. Tuning this value depending on the forgetting factor allows to improve the performance in varying setup of transponders. Afterwards step 1017 is executed.

In step 1008 a check is performed to determine if the right transponder of this group was received This is indicated by the RFID value of the transponder. If that is not the case step 1001 is executed to select the next transponder group. Otherwise step 1009 is executed.

In step 1009 the direction information is determined to move right. This is for example indicated by setting xt = 90. Due to missing left transponder set the configured maximum aberrance value as return value which is defined by configuration and is a parameter to control the effect of this decision. The maximum aberrance value is set for example as described above in step 1007. After this step 1017 is executed.

In step 1010 the difference between the signal strengths is calculated from both available RSSI transponder values:

$$DiffRSSI = leftRSSI\text{-}rightRSSI.$$

Afterwards a step 1011 is executed.

In step 1011 the difference is compared to a first tolerance toleranceEW. In the example when the difference of signal strengths DiffRSSI is greater than a positive tolerance value a step 1012 is executed. Otherwise the difference is too small and will be ignored. In that case the step 1013 is executed.

The first tolerance value toleranceEW is set for example by an administrator during configuration.

In step 1012 a return value is determined depending on the difference between the signal strengths and the tolerance value. For example the return value is calculated as:

$$returnValue = DiffRSSI – toleranceEW.$$

This value indicates a weight for moving into left direction and is temporarily stored. This value will be used in the final decision procedure as described in step 2 of figure 11.

Afterwards the step 1017 is executed

In step 1013 the difference is compared to the first tolerance toleranceEW. In the example, when the difference between the signal strengths DiffRSSI is less than the negative first tolerance value toleranceEW a step 1014 is executed. Otherwise the difference is too small and will be ignored. In that case step 1015 is executed.

In step 1014 the sum of the difference between the signal strengths DiffRSSI and the first tolerance value toleranceEW is determined as return value:

$$returnValue=DiffRSSI+toleranceEW.$$

The first tolerance value toleranceEW is for example selected as 2 or 3 RSSI for high accuracy. Other first tolerance values may be used as well.

This value indicates a weight for moving into right direction and is temporarily stored. This value will be used in the final decision procedure as described in step 2 of the first method according to figure 11.

Afterwards the step 1017 is executed.

In step 1015 a left/right correction is determined using this transponder group. Because there is no great difference of RSSI values in this transponder group is added to the ignore list that is temporarily stored.

Afterwards step 1001 is executed to check for additional transponder groups.

In step 1016 the direction information is determined to forward driving. This is for example indicated by setting xt=0. This is a default value that is used in this case because no decision to correct left/right position based on the available transponder group information can be made.

Afterwards step 1017 is executed.

In step 1017 the return value is handed over to the first method. Afterwards step 10 of the first method is continued.

Figure 14 depicts another procedure that calculates the forward and backward direction and finds the decision to stop the drive.

In step 2001 a check is performed to determine if the transponder with the RFID 7 and 8 are received. If not a step 2002 is executed, otherwise a step 2007 is executed.

In step 2002 a check is performed to determine if only the transponder with RFID 7 is received. In that case a step 2003 is executed, otherwise a step 2004 is executed.

In step 2003 the direction information is set to move forward. This is for example indicated by setting xt=0. Afterwards a step 2013 is executed.

In step 2004 a check is performed to determine if only the transponder with the RFID 8 is received. In that case a step 2005 is executed, otherwise a step 2006 is executed.

In step 2005 the direction information is set to move backward. This is for example indicated by setting xt=180. Afterwards the step 2013 is executed.

In step 2006 the direction information is set to forward driving. This is for example indicated by setting xt=0. This is a default value because none of the transponders with RFID 7 or 8 is received. Afterwards the step 2013 is executed.

In step 2007 the transponders with RFID 7 and RFID 8 are received and the difference of the RSSI values of both is calculated:

$$DiffRSSI=RSSI(RFID107)-RSSI(RFID108).$$

Afterwards a step 2008 is executed.

In step 2008 the difference of the signal strengths is compared to a second tolerance value tolerance NS. When the difference DiffRSSI is greater than the positive second tolerance value toleranceNS a step 2009 is executed. Otherwise the difference is too small and is ignored. In that case a step 2010 is executed.

The second tolerance value toleranceNS is for example set by an administrator in the configuration.

In step 2009 another return value is determined depending on the difference between the signal strengths DiffRSSI and the second tolerance value toleranceNS:

$$returnValue = DiffRSSI - toleranceNS.$$

The second tolerance value toleranceNS is for example selected as 2 or 3 RSSI for high accuracy. Other second tolerance values may be used as well.

This value indicates a weight for moving into forward direction and is temporarily stored. This value will be used in the final decision procedure as described in step 4 of the first method according to figure 11.

Afterwards the step 2013 is executed.

In step 2010 a check is performed to determine if the difference between the signal strengths DiffRSSI is less than the negative second tolerance value toleranceNS. In that case a step 2011 is executed. Otherwise the difference is too small and is ignored. In that case a step 2012 is executed.

In step 2011 the sum of the difference between the signal strengths DiffRSSI and the second tolerance value toleranceNS is determined as return value:

$$returnValue = DiffRSSI + toleranceNS.$$

This value indicates a weight for moving into backward direction and is temporarily stored. This value will be used in the final decision procedure as described in step 4 of the first method according to figure 11.

Afterwards the step 2013 is executed.

In step 2012 a test is performed to determine if the RSSI values from the transponders with RFID 7 and RFID 8 are equal or within a predetermined third tolerance value. The third tolerance value is for example configured by an administrator. In case the RSSI values are equal or within the third tolerance value, the position is optimal. In that case the direction information is to stop the parking. This is for example indicated by setting xt=999.

This results in the example in the arrow 132 being a point in figure 9.

Afterwards step 2013 is executed.

In step 2013 the return value is handed over and step 40 of the first method is continued.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method for determining direction information for guiding a vehicle (100) to a predetermined position, where the predetermined position is defined by the placement of a first and a second receiver and by the radio frequency identification devices mounted at the vehicle, depending on the reception of a first predetermined radio signal comprising

   - detecting (5) a second predetermined radio signal at the first receiver (121),
   - detecting (1,2,3,4) the first predetermined radio signal at the second receiver (122),

   wherein the first predetermined radio signal and the second predetermined radio signal are respectively sent by two radio frequency identification devices having predetermined mounting positions in the vehicle,
   wherein detecting a signal allows to identify the mounting position of the radio frequency identification device having sent said signal, and determining (6) the direction information depending on the reception of the first predetermined radio signal at the second receiver (122) and the mounting position of the radio frequency identification device having sent said first predetermined radio signal, independent of the reception of the second predetermined radio signal, when the second predetermined radio signal is detected at the first receiver (121),
   wherein the reception is determined depending on the signal strength of the respective predetermined radio signal.

2. The method according to claim 1, further comprising the step of determining (7) the direction information from the reception of the first predetermined radio signal at the first receiver (121) when the first predetermined radio signal is detected at the first receiver (121) and the second predetermined radio signal is not detected at the first receiver (121).

3. The method according to claim 1 or 2, comprising detecting (1,2,3,4) a third predetermined radio signal at the second receiver (122), and determining (8) the direction information depending on the difference between the reception of the first predetermined radio signal and a reception of the third predetermined radio signal at the second receiver (122).

4. The method according to any of the aforementioned claims, comprising determining (8) a left or right steering instruction depending on the reception of the first predetermined radio signal or the third predetermined radio signal.

5. The method according to claim 3, comprising
   detecting a fourth predetermined radio signal at the first receiver (121), and determining a forward or backward driving instruction depending on the reception of the fourth predetermined radio signal.

6. The method according to any of the aforementioned claims, comprising determining the direction information from direction information previously determined and a current direction information, the both combined depending on a predetermined value.

7. A device (200) for determining direction information for guiding a vehicle (100) to a predetermined position, where the predetermined position is defined by the placement of a first and a second receiver and by the radio frequency identification devices mounted at the vehicle, from the reception of a first predetermined radio signal comprising

   - a first detector (201) operable to detect a second predetermined radio signal at the first receiver (121),
   - a second detector (202) operable to detect the first predetermined radio signal at the second receiver (122), wherein the first predetermined radio signal and the second predetermined radio signal are respectively sent by two radio frequency identification devices having predetermined mounting positions in the vehicle, wherein detecting a signal allows to identify the mounting position of the radio frequency identification device having sent said signal, and
   - a processing unit (203) operable to determine the direction information from the reception of the first predetermined radio signal at the second receiver (122) and the mounting position of the radio frequency identification device having sent said first predetermined radio signal, independent of the reception of the second predetermined radio signal,

when the second predetermined radio signal is detected at the first receiver (121),

wherein the reception is determined depending on the signal strength of the respective predetermined radio signal.

8. The device (200) according to claim 8, wherein the first detector (201) is further operable to detect the first predetermined radio signal at the first receiver (121), and the processing unit (203) is further operable to determine the direction information from the reception of the first predetermined radio signal at the first receiver (121) when the first predetermined radio signal is detected at the first receiver (121) and the second predetermined radio signal is not detected at the first receiver (121).

9. The device (200) according to claim 8 or 9, wherein the second detector (202) is operable to detect a third predetermined radio signal at the second receiver (122), and the processing unit (203) is operable to determine the direction information depending on the difference between the reception of the first predetermined radio signal and a reception of the third predetermined radio signal at the second receiver (122).

10. The device (200) according to any of claims 8 to 10, wherein the processing unit (203) is operable to determining a left or right steering instruction depending on the reception of the first predetermined radio signal or the third predetermined radio signal.

11. The device (200) according to claim 11, wherein the first detector (201) is operable to detect a fourth predetermined radio signal at the first receiver (121), and the processing unit (203) is operable to determine a forward or backward driving instruction depending on the reception of the fourth predetermined radio signal.

12. The device (200) according to any of claims 8 to 12, wherein the reception is determined depending on the signal strength of the respective predetermined radio signal.

13. The device (200) according to any of claims 8 to 13, wherein the processing unit (203) is operable to store a previously determined the direction information and to determine the direction information from the previously determined direction information and a current direction, the both combined depending on a predetermined value.

14. A computer program for determining direction information for guiding a vehicle (100) into a predetermined position, wherein said computer program, when executed on a computer, causes the computer to perform the steps of the method according to any of claims 1 to 7.

**Patentansprüche**

1. Verfahren zum Bestimmen von Richtungsinformation zum Leiten eines Fahrzeugs (100) zu einer vorbestimmten Position, wobei die vorbestimmte Position definiert ist durch die Platzierung eines ersten und eines zweiten Empfängers und durch die Funkfrequenz-Identifikationsvorrichtungen, die am Fahrzeug angebracht sind, abhängig von dem Empfang eines ersten vorbestimmten Funksignals, umfassend

- Erkennen (5) eines zweiten vorbestimmten Funksignals am ersten Empfänger (121),
- Erkennen (1,2,3,4) des ersten vorbestimmten Funksignals am zweiten Empfänger (122), wobei das erste vorbestimmte Funksignal und das zweite vorbestimmte Funksignal jeweils von zwei Funkfrequenz-Identifikationsvorrichtungen gesendet werden, die vorbestimmte Montagepositionen im Fahrzeug aufweisen, wobei das Erkennen eines Signals gestattet, die Montageposition der Funkfrequenz-Identifikationsvorrichtung zu identifizieren, die besagtes Signal gesendet hat, und Bestimmen (6) der Richtungsinformation in Abhängigkeit von dem Empfang des ersten vorbestimmten Funksignals am zweiten Empfänger (122) und der Montageposition der Funkfrequenz-Identifikationsvorrichtung, die das besagte erste vorbestimmte Funksignal gesendet hat, unabhängig von dem Empfang des zweiten vorbestimmten Funksignals, wenn das zweite vorbestimmte Funksignal am ersten Empfänger (121) erkannt wird,

wobei der Empfang bestimmt wird in Abhängigkeit von der Signalstärke des entsprechenden vorbestimmten Funksignals.

2. Verfahren nach Anspruch 1, weiterhin umfassend den Schritt des Bestimmens (7) der Richtungsinformation aus dem Empfang des ersten vorbestimmten Funksignals am ersten Empfänger (121), wenn das erste vorbestimmte Funksignal am ersten Empfänger (121) erkannt wird und das zweite vorbestimmte Funksignal nicht am ersten Empfänger (121) erkannt wird.

3. Verfahren nach Anspruch 1 oder 2, umfassend das Erkennen (1,2,3,4) eines dritten vorbestimmten Funksignals am zweiten Empfänger (122) und Bestimmen (8) der Richtungsinformation in Abhängigkeit der Differenz zwischen dem Empfang des ersten vorbestimmten Funksignals und einem Empfang des dritten vorbestimmten Funksignals am zweiten Empfänger (122).

4. Verfahren nach einem beliebigen der vorgenannten Ansprüche, umfassend das Bestimmen (8) einer Links- oder Rechtslenkanweisung in Abhängigkeit des Empfangs des ersten vorbestimmten Funksignals oder des dritten vorbestimmten Funksignals.

5. Verfahren nach Anspruch 3, umfassend
Erkennen eines vierten vorbestimmten Funksignals am ersten Empfänger (121) und Bestimmen einer Vor- oder Zurückfahranweisung in Abhängigkeit vom Empfang des vierten vorbestimmten Funksignals.

6. Verfahren nach einem beliebigen der vorgenannten Ansprüche, umfassend das Bestimmen der Richtungsinformation aus der Richtungsinformation, die vorher bestimmt worden ist, und einer derzeitigen Richtungsinformation, wobei die beiden kombiniert von einem vorbestimmten Wert abhängen.

7. Vorrichtung (200) zum Bestimmen der Richtungsinformation zum Leiten eines Fahrzeugs (100) zu einer vorbestimmten Position, wobei die vorbestimmte Position definiert ist durch die Platzierung eines ersten und eines zweiten Empfängers und durch die Funkfrequenz-Identifikationsvorrichtungen, die am Fahrzeug angebracht sind, aus dem Empfang eines ersten vorbestimmten Funksignals, umfassend

- einen ersten Detektor (201), der betreibbar ist zum Erkennen eines zweiten vorbestimmten Funksignals am ersten Empfänger (121),
- einen zweiten Detektor (202), der betreibbar ist zum Erkennen des ersten vorbestimmten Funksignals am zweiten Empfänger (122), wobei das erste vorbestimmte Funksignal und das zweite vorbestimmte Funksignal jeweils von zwei Funkfrequenz-Identifikationsvorrichtungen gesendet werden, die vorbestimmte Montagepositionen im Fahrzeug aufweisen, wobei das Erkennen eines Signals gestattet, die Montageposition der Funkfrequenz-Identifikationsvorrichtung zu identifizieren, die das besagte Signal gesendet hat, und
- eine Verarbeitungseinheit (203), die betreibbar ist zum Erkennen der Richtungsinformation aus dem Empfang des ersten vorbestimmten Funksignals am zweiten Empfänger (122) und der Montageposition der Funkfrequenz-Identifikationsvorrichtung, die das besagte erste vorbestimmte Funksignal gesendet hat, unabhängig von dem Empfang des zweiten vorbestimmten Funksignals,

wenn das zweite vorbestimmte Funksignal am ersten Empfänger (121) erkannt wird, wobei der Empfang bestimmt wird in Abhängigkeit von der Signalstärke des entsprechenden vorbestimmten Funksignals.

8. Vorrichtung (200) nach Anspruch 8, wobei der erste Detektor (201) weiterhin betreibbar ist zum Erkennen des ersten vorbestimmten Funksignals am ersten Empfänger (121) und die Verarbeitungseinheit (203) weiterhin betreibbar ist zum Bestimmen der Richtungsinformation aus dem Empfang des ersten vorbestimmten Funksignals am ersten Empfänger (121), wenn das erste vorbestimmte Funksignal am ersten Empfänger (121) erkannt wird und das zweite vorbestimmte Funksignal nicht am ersten Empfänger (121) erkannt wird.

9. Vorrichtung (200) nach Anspruch 8 oder 9, wobei der zweite Detektor (202) betreibbar ist zum Erkennen eines dritten vorbestimmten Funksignals am zweiten Empfänger (122) und die Verarbeitungseinheit (203) betreibbar ist zum Bestimmen der Richtungsinformation in Abhängigkeit der Differenz zwischen dem Empfang des ersten vorbestimmten Funksignals und einem Empfang des dritten vorbestimmten Funksignals am zweiten Empfänger (122).

10. Vorrichtung (200) nach einem beliebigen der Ansprüche 8 bis 10, wobei die Verarbeitungseinheit (203) betreibbar ist zum Bestimmen einer Links- oder Rechtslenkanweisung in Abhängigkeit des Empfangs des ersten vorbestimmten Funksignals oder des dritten vorbestimmten Funksignals.

11. Vorrichtung (200) nach Anspruch 11, wobei der erste Detektor (201) betreibbar ist zum Erkennen eines vierten

**EP 2 921 376 B1**

vorbestimmten Funksignals am ersten Empfänger (121) und die Verarbeitungseinheit (203) betreibbar ist zum Bestimmen einer Vor- oder Zurückfahranweisung in Abhängigkeit vom Empfang des vierten vorbestimmten Funksignals.

12. Vorrichtung (200) nach einem beliebigen der Ansprüche 8 bis 12, wobei der Empfang bestimmt wird in Abhängigkeit von der Signalstärke des entsprechenden vorbestimmten Funksignals.

13. Vorrichtung (200) nach einem beliebigen der Ansprüche 8 bis 13, wobei die Verarbeitungseinheit (203) betreibbar ist zum Speichern einer vorher bestimmten Richtungsinformation und zum Bestimmen der Richtungsinformation aus der vorher bestimmten Richtungsinformation und einer derzeitigen Richtung, wobei beide kombiniert werden in Abhängigkeit eines vorbestimmten Werts.

14. Computerprogramm zum Bestimmen von Richtungsinformation zum Leiten eines Fahrzeugs (100) in eine vorbestimmte Position, wobei besagtes Computerprogramm bei dessen Ausführung auf einem Computer den Computer veranlasst, die Schritte des Verfahrens nach einem beliebigen der Ansprüche 1 bis 7 durchzuführen.


**Revendications**

1. Procédé de détermination d'informations de direction pour guider un véhicule (100) vers une position prédéterminée, où la position prédéterminée est définie par le placement d'un premier et d'un deuxième récepteurs et par les dispositifs d'identification par radiofréquence montés sur le véhicule, en fonction de la réception d'un premier signal radio prédéterminé comprenant les étapes suivantes :

   - détecter (5) un deuxième signal radio prédéterminé au niveau du premier récepteur (121),
   - détecter (1, 2, 3, 4) le premier signal radio prédéterminé au niveau du deuxième récepteur (122),

   dans lequel le premier signal radio prédéterminé et le deuxième signal radio prédéterminé sont respectivement envoyés par deux dispositifs d'identification par radiofréquence ayant des positions de montage prédéterminées dans le véhicule, dans lequel la détection d'un signal permet d'identifier la position de montage du dispositif d'identification par radiofréquence ayant envoyé ledit signal, et déterminer (6) les informations de direction en fonction de la réception du premier signal radio prédéterminé au niveau du deuxième récepteur (122) et la position de montage du dispositif d'identification par radiofréquence ayant envoyé ledit premier signal radio prédéterminé, indépendamment de la réception du deuxième signal radio prédéterminé, lorsque le deuxième signal radio prédéterminé est détecté au niveau du premier récepteur (121),
   dans lequel la réception est déterminée en fonction de l'intensité de signal du signal radio prédéterminé respectif.

2. Procédé selon la revendication 1, comprenant en outre l'étape de détermination (7) des informations de direction à partir de la réception du premier signal radio prédéterminé au niveau du premier récepteur (121) lorsque le premier signal radio prédéterminé est détecté au niveau du premier récepteur (121) et lorsque le deuxième signal radio prédéterminé n'est pas détecté au niveau du premier récepteur (121).

3. Procédé selon la revendication 1 ou 2, comprenant la détection (1, 2, 3, 4) d'un troisième signal radio prédéterminé au niveau du deuxième récepteur (122), et la détermination (8) des informations de direction en fonction de la différence entre la réception du premier signal radio prédéterminé et une réception du troisième signal radio prédéterminé au niveau du deuxième récepteur (122).

4. Procédé selon l'une quelconque des revendications susmentionnées, comprenant la détermination (8) d'une instruction de direction gauche ou droite en fonction de la réception du premier signal radio prédéterminé ou du troisième signal radio prédéterminé.

5. Procédé selon la revendication 3, comprenant :

   la détection d'un quatrième signal radio prédéterminé au niveau du premier récepteur (121), et la détermination d'une instruction de conduite en marche avant ou en marche arrière en fonction de la réception du quatrième signal radio prédéterminé.

6. Procédé selon l'une quelconque des revendications susmentionnées, comprenant la détermination des informations de direction à partir d'informations de direction précédemment déterminées et d'informations de direction actuelles, les deux types d'informations étant combinés en fonction d'une valeur prédéterminée.

7. Dispositif (200) de détermination d'informations de direction pour guider un véhicule (100) vers une position prédéterminée, où la position prédéterminée est définie par le placement d'un premier et d'un deuxième récepteurs et par les dispositifs d'identification par radiofréquence montés sur le véhicule, à partir de la réception d'un premier signal radio prédéterminé comprenant :

- un premier détecteur (201) permettant de détecter un deuxième signal radio prédéterminé au niveau du premier récepteur (121),
- un deuxième détecteur (202) permettant de détecter le premier signal radio prédéterminé au niveau du deuxième récepteur (122),
dans lequel le premier signal radio prédéterminé et le deuxième signal radio prédéterminé sont respectivement envoyés par deux dispositifs d'identification par radiofréquence ayant des positions de montage prédéterminées dans le véhicule, dans lequel la détection d'un signal permet d'identifier la position de montage du dispositif d'identification par radiofréquence ayant envoyé ledit signal, et
- une unité de traitement (203) permettant de déterminer les informations de direction à partir de la réception du premier signal radio prédéterminé au niveau du deuxième récepteur (122) et la position de montage du dispositif d'identification par radiofréquence ayant envoyé ledit premier signal radio prédéterminé, indépendamment de la réception du deuxième signal radio prédéterminé, lorsque le deuxième signal radio prédéterminé est détecté au niveau du premier récepteur (121),
dans lequel la réception est déterminée en fonction de l'intensité de signal du signal radio prédéterminé respectif.

8. Dispositif (200) selon la revendication 8, dans lequel le premier détecteur (201) permet en outre de détecter le premier signal radio prédéterminé au niveau du premier récepteur (121), et l'unité de traitement (203) permet en outre de déterminer les informations de direction à partir de la réception du premier signal radio prédéterminé au niveau du premier récepteur (121) lorsque le premier signal radio prédéterminé est détecté au niveau du premier récepteur (121) et lorsque le deuxième signal radio prédéterminé n'est pas détecté au niveau du premier récepteur (121).

9. Dispositif (200) selon la revendication 8 ou 9, dans lequel le deuxième détecteur (202) permet de détecter un troisième signal radio prédéterminé au niveau du deuxième récepteur (122), et l'unité de traitement (203) permet de déterminer les informations de direction en fonction de la différence entre la réception du premier signal radio prédéterminé et une réception du troisième signal radio prédéterminé au niveau du deuxième récepteur (122).

10. Dispositif (200) selon l'une quelconque des revendications 8 à 10, dans lequel l'unité de traitement (203) permet de déterminer une instruction de direction gauche ou droite en fonction de la réception du premier signal radio prédéterminé ou du troisième signal radio prédéterminé.

11. Dispositif (200) selon la revendication 11, dans lequel le premier détecteur (201) permet de détecter un quatrième signal radio prédéterminé au niveau du premier récepteur (121), et l'unité de traitement (203) permet de déterminer une instruction de conduite en marche avant ou en marche arrière en fonction de la réception du quatrième signal radio prédéterminé.

12. Dispositif (200) selon l'une quelconque des revendications 8 à 12, dans lequel la réception est déterminée en fonction de l'intensité de signal du signal radio prédéterminé respectif.

13. Dispositif (200) selon l'une quelconque des revendications 8 à 13, dans lequel l'unité de traitement (203) permet de stocker des informations de direction précédemment déterminées et de déterminer les informations de direction à partir des informations de direction précédemment déterminées et d'une direction actuelle, les deux types d'information étant combinés en fonction d'une valeur prédéterminée.

14. Programme informatique de détermination d'informations de direction pour guider un véhicule (100) dans une position prédéterminée, dans lequel ledit programme informatique, lorsqu'il est exécuté sur un ordinateur, entraîne l'exécution par l'ordinateur des étapes du procédé selon l'une quelconque des revendications 1 à 7.

*Fig. 1*

**Fig. 2**

**Fig. 3**

**Fig. 4**

**Fig. 5**

**Fig. 6**

**Fig. 7**

**Fig. 8**

**Fig. 9**

**Fig. 10**

*Fig. 11*

start

10

20

30

40

end

*Fig. 12*

*Fig. 13*

*Fig. 14*

**EP 2 921 376 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001027360 A
- WO 2007057969 A
- US 2012095617 A